# FASCICULE DE BREVET EUROPEEN

(11) **EP 2 108 586 B1**
(45) Date de publication et mention de la délivrance du brevet: **17.11.2010**
(21) Numéro de dépôt: 09157386.5
(22) Date de dépôt: 06.04.2009
(51) Int. Cl.: B64G 1/22

(54) **Mât télescopique spatial à verrouillage sous contrainte résiduelle de serrage**
Teleskopmast für den Weltraum mit Verriegelung unter Restspanndruck
Spatial telescopic mast with locking under residual interference fit stress

(30) Priorité: 07.04.2008 FR 0801899
(43) Date de publication de la demande: 14.10.2009
(73) Titulaire: Centre National d'Etudes Spatiales (C.N.E.S.), 75039 Paris Cedex 01 (FR)
(72) Inventeur: Dupuy, Christian, 31140 Saint Loup Cammas (FR); Pires, Victor, 31140 Saint Loup Cammas (FR)
(74) Mandataire: Cabinet BARRE LAFORGUE & associés

(56) Documents cités:
- DE-C1- 3 630 746
- US-A- 5 315 795

## Description

L'invention concerne un mât télescopique de système spatial (par exemple satellite spatial artificiel, sonde spatiale, véhicule spatial...).

Un mât spatial peut servir par exemple pour porter un capteur (magnétomètre, laser, caméra, émetteur, récepteur...) à son extrémité distale, de façon à l'éloigner du corps principal du système spatial, pour effectuer des mesures sur ce corps principal et/ou être hors de son influence (notamment de nature électromagnétique (parasites), optique (masquage), gravitationnelle ou inertielle). Pour des raisons d'encombrement, un tel mât dont la longueur doit pouvoir être de plusieurs mètres, doit être replié au lancement et déployé uniquement lorsque le système spatial est dans l'espace -notamment en orbite- en position d'utilisation du mât.

Une des solutions envisagée est donc de prévoir un mât télescopique (DE 3630746) comprenant une pluralité de segments cylindriques coaxiaux imbriqués radialement les uns dans les autres. En position initiale rétractée, au lancement, les segments sont rétractés les uns dans les autres de façon à occuper un encombrement axial réduit. Un mécanisme motorisé de déploiement axial des segments permet de les déployer jusqu'à une position déployée où ils sont entièrement déployés en prolongement axial les uns des autres, le mât ayant alors sa longueur nominale de fonctionnement.

Pour maintenir cette longueur et empêcher toute rétraction intempestive, il est prévu, à la jonction de chaque paire de segments adjacents déployés, un dispositif de blocage axial et de verrouillage l'un par rapport à l'autre des deux segments déployés, ce dispositif comprenant une pluralité de verrous répartis à la périphérie de la jonction. US 5315795 décrit un exemple de mât télescopique doté de tels verrous formés de chevilles radiales élastiquement rétractables s'engageant dans des trous.

Dans la conception de tels mâts télescopiques, il est nécessaire de connaître avec une grande précision la longueur du mât lorsqu'il est totalement déployé, et donc de maîtriser parfaitement le déploiement et le verrouillage des différents segments sans jeu les uns par rapport aux autres à l'état déployé. Or, les verrous du type à chevilles élastiques s'engageant dans des trous impliquent nécessairement la présence d'un certain jeu et/ou une difficulté d'insertion de chaque cheville dans le trou correspondant.

Il est en outre nécessaire que les caractéristiques dimensionnelles du mât télescopique vérifiées au sol correspondent exactement à celles obtenues dans l'espace, c'est-à-dire que la manoeuvre de déploiement, qui doit être commandée et automatique, soit parfaitement reproductible.

Par ailleurs, le mât télescopique doit présenter une raideur en flexion suffisante, avec un premier mode propre à une fréquence propre supérieure à 1 Hz. Or, l'obtention d'une telle raideur se traduit dans les structures proposées jusqtt'à maintenant par une masse par unité de longueur déployée supérieure à 3 kg/m. À l'inverse, les versions les plus allégées de tels mâts télescopiques proposées jusqu'à maintenant présentent une masse par unité de longueur déployée qui reste supérieure à 0,9 kg/m, et un premier mode propre en flexion à environ 0,5 Hz.

Dans ce contexte, l'invention vise à proposer un mât télescopique spatial de caractéristiques dimensionnelles et mécaniques améliorées pour une masse réduite.

Plus particulièrement, l'invention vise à proposer un mât télescopique spatial pouvant présenter une masse par unité de longueur déployée inférieure à 0,75 kg/m, permettant son intégration à bord des systèmes spatiaux légers (tels que les satellites de moins de 250 kg), avec un premier mode propre en flexion à une fréquence propre supérieure à 1 Hz.

L'invention vise également à proposer un mât télescopique spatial qui de surcroît soit particulièrement résistant aux efforts ou variations d'efforts, aux dilatations thermiques et aux effets thermoélastiques, et conserve ses caractéristiques dimensionnelles et mécaniques.

L'invention concerne donc un mât télescopique de système spatial comprenant :
- une pluralité de segments cylindriques coaxiaux imbriqués radialement les uns dans les autres,
- un mécanisme motorisé de déploiement axial des segments à partir d'une position rétractée initiale où ils sont rétractés les uns dans les autres, jusqu'à une position déployée où ils sont entièrement déployés en prolongement axial les uns des autres,
- à la jonction de chaque paire de segments adjacents déployés, un dispositif de blocage axial et de verrouillage automatique l'un par rapport à l'autre des deux segments déployés, ce dispositif comprenant une pluralité de verrous répartis à la périphérie de la jonction,
caractérisé en ce que ledit dispositif de blocage axial et de verrouillage comprend :
- un épaulement radial, dit épaulement proximal, solidaire d'un segment, dit segment mobile, à déployer par rapport à un autre segment, dit segment fixe, et
- un épaulement radial, dit épaulement distal, solidaire du segment fixe, ces deux épaulements proximal et distal étant adaptés pour venir en contact en fin de déploiement du segment mobile par rapport au segment fixe, l'épaulement proximal étant à l'amont de l'épaulement distal par rapport au sens de déploiement, de façon à former une butée axiale de déploiement des deux segments,
- et en ce que les verrous sont répartis à la périphérie des épaulements en contact et adaptés pour les serrer l'un contre l'autre axialement avec une contrainte résiduelle permanente de serrage élastique axial.

Un mât télescopique selon l'invention présente une très grande raideur en flexion à l'état déployé, une longueur prédéterminée à l'état déployé d'une grande précision et parfaitement reproductible avec une grande fiabilité, sans jeu, pour une faible masse linéaire à l'état déployé, et est susceptible de conserver ses propriétés dimensionnelles et mécaniques en subissant des efforts ou des variations d'efforts, des dilatations thermiques ou des effets thermoélastiques. Par ailleurs, la présence d'une contrainte résiduelle de serrage élastique axial entre les segments autorise un montage de type hyperstatique entre les différents segments et le mécanisme motorisé de déploiement, puisqu'un certain déplacement axial relatif est autorisé par les verrous à l'encontre de la contrainte de serrage axial. De surcroît, la valeur de la contrainte résiduelle permanente de serrage axial peut être ajustée à une valeur prédéterminée en fonction de l'application.

Les verrous d'un mât télescopique selon l'invention maintenant une contrainte résiduelle permanente de serrage élastique axial entre les épaulements en butée peuvent faire l'objet de différents modes de réalisation. Dans un mode de réalisation particulièrement avantageux, un mât télescopique selon l'invention est aussi caractérisé en ce que :
- il comprend, pour chaque segment mobile, un flasque d'entraînement solidaire du segment mobile et entraîné en translation axiale de déploiement par le mécanisme motorisé de déploiement axial,
- chaque verrou comprend :
   - un doigt de crochetage s'étendant axialement au-delà de l'épaulement proximal du segment mobile dans le sens de déploiement, ce doigt de crochetage étant solidaire du flasque d'entraînement et adapté pour pouvoir être crocheté en prise avec une portée de verrouillage solidaire de l'épaulement distal du segment fixe, ce par quoi tout déplacement ultérieur relatif du doigt de crochetage par rapport à l'épaulement distal du segment fixe dans le sens opposé au sens de déploiement est interdit,
   - au moins un ressort, dit ressort de serrage axial, interposé entre le flasque d'entraînement et l'épaulement proximal du segment mobile de façon à rappeler le flasque d'entraînement et chaque doigt de crochetage par rapport à l'épaulement proximal du segment mobile axialement dans le sens opposé au sens de déploiement,
   - la longueur de chaque doigt de crochetage étant adaptée pour que le crochetage de ce doigt avec ladite portée de verrouillage du segment fixe nécessite une course de déploiement du flasque d'entraînement à l'encontre de chaque ressort de serrage axial, au-delà de sa position où les épaulements arrivent en contact de butée axiale.

Plus particulièrement, avantageusement et selon l'invention, le flasque d'entraînement est à l'amont de l'épaulement proximal du segment mobile, chaque ressort de serrage axial est un ressort de compression tendant à écarter le flasque d'entraînement de l'épaulement proximal. Rien n'empêche en variante de prévoir que le flasque d'entraînement soit à l'aval de l'épaulement proximal du segment mobile et que chaque ressort de serrage axial soit un ressort de traction, mais, dans ce cas, le montage des différents éléments est plus complexe, et l'encombrement axial plus important.

Dans un mode de réalisation avantageux, un mât selon l'invention est aussi caractérisé en ce que chaque segment mobile présente un corps principal tubulaire de dimension radiale inférieure à la dimension radiale du flasque d'entraînement, et en ce que chaque doigt de crochetage du segment mobile s'étend axialement à l'extérieur du corps principal tubulaire et est formé d'une tige élastiquement flexible au moins radialement vers l'intérieur présentant une extrémité libre formant crochet, de sorte que le crochetage de chaque doigt de crochetage du segment mobile avec ladite portée de verrouillage de l'épaulement distal du segment fixe intervient par déformation élastique en flexion radialement vers l'intérieur du doigt de crochetage.

Avantageusement et selon l'invention, l'extrémité libre de chaque doigt de crochetage présente au moins une portée inclinée par rapport à l'axe du doigt de crochetage, cette portée inclinée s'étendant radialement vers l'extérieur au-delà de la tige formant le doigt de crochetage et étant adaptée pour venir au contact d'une paroi interne solidaire de l'épaulement distal du segment fixe, ladite portée inclinée s'étendant radialement jusqu'à une distance de l'axe du mât supérieure à la distance entre ladite paroi interne et l'axe du mât, de façon à entraîner, sous l'effet du déploiement, la déformation en flexion élastique du doigt de crochetage. Il est à noter que la distance entre la tige du doigt de crochetage et l'axe du mât est inférieure à la distance entre ladite paroi interne et l'axe du mât, de sorte que la tige formant le doigt de crochetage peut s'engager à l'intérieur (radialement) de cette paroi interne, jusqu'à ce que le crochetage intervienne.

La portée inclinée du doigt de crochetage forme la partie du crochet qui permet donc de commander la déformation élastique en flexion vers l'intérieur du doigt de crochetage. Cette portée inclinée est reliée à la tige formant la partie principale du doigt de crochetage par un épaulement radial formant crochet. Lorsque cet épaulement radial ainsi que la portée de verrouillage du segment fixe s'étendent selon un plan radial transversal, le crochetage réalise un verrouillage irréversible (sauf à déformer manuellement en flexion le doigt de crochetage radialement vers l'intérieur). Un mât télescopique selon l'invention est en effet avantageusement du type à déploiement unique. Ainsi, avantageusement et selon l'invention, chaque doigt de crochetage et ladite portée de verrouillage du segment fixe sont adaptés pour former un verrouillage normalement irréversible du doigt de crochetage par rapport à l'épaulement distal du segment fixe.

Le mécanisme motorisé de déploiement d'un mât selon l'invention peut faire l'objet de différentes variantes de réalisation, les épaulements formant butée axiale entre les segments et les verrous à serrage élastique axial étant compatibles avec la plupart des modes de réalisation des mécanismes motorisés de déploiement axial pouvant être envisagés. Cela étant, avantageusement et selon l'invention, le mécanisme motorisé de déploiement axial des segments comprend une vis sans fin axiale centrale et, pour chaque segment à déployer, des doigts d'engrènement portés par le flasque d'entraînement et s'étendant radialement vers l'intérieur pour pouvoir coopérer par engrènement avec cette vis centrale.

Par ailleurs, avantageusement et selon l'invention, chaque épaulement proximal et chaque épaulement distal comprennent une paroi en forme de couronne plane s'étendant dans un plan transversal radial à l'axe de déploiement. Les deux épaulements viennent en contact l'un avec l'autre au moins par des portions en contact de ces couronnes planes radiales. Cette forme de réalisation est en effet celle qui confère le maximum de rigidité à l'assemblage entre les segments adjacents déployés.

En outre, avantageusement et son invention, le segment mobile s'étend radialement à l'intérieur du segment fixe, l'épaulement proximal du segment mobile s'étendant radialement vers l'extérieur par rapport à une paroi externe cylindrique de corps principal du segment mobile, l'épaulement distal du segment fixe s'étendant radialement vers l'intérieur par rapport à une paroi interne cylindrique de corps principal du segment fixe. Autrement dit, dans un mât selon l'invention, le segment formant l'extrémité distale du mât à l'état déployé est le segment qui présente les moindres dimensions radiales et qui est déployé en premier lieu, les autres segments étant ensuite déployés successivement, du plus petit jusqu'au plus grand. Rien n'empêche, en variante, de prévoir au contraire que le segment formant l'extrémité distale du mât déployé en premier lieu soit le segment de plus grandes dimensions radiales. En effet, l'invention est également applicable à cette variante de réalisation. Néanmoins, cette variante de réalisation présente le plus souvent l'inconvénient de présenter une masse plus importante déportée par rapport au point d'ancrage du mât.

En outre, avantageusement, un mât selon l'invention est aussi caractérisé en ce qu'il comprend :
- un segment proximal solidaire du mécanisme motorisé de déploiement,
- un segment distal dont l'extrémité distale forme l'extrémité libre distale du mât en position déployée,
- au moins un segment intermédiaire interposé radialement entre le segment proximal et le segment distal,
- pour chaque segment intermédiaire, un mécanisme de blocage axial de ce segment intermédiaire par rapport au segment qui lui est immédiatement adjacent du
côté du segment proximal, ce mécanisme de blocage axial étant adapté pour pouvoir être libéré en fin de déploiement du segment immédiatement adjacent au segment intermédiaire du côté du segment distal.

De la sorte, le déploiement du mât télescopique est entièrement automatique, chaque segment initialement fixe étant automatiquement libéré (et entamant alors son déploiement) en fin de déploiement du segment mobile immédiatement adjacent. Avantageusement et selon l'invention, le mécanisme de blocage axial comprend une tige de commande guidée en translation axiale par rapport à l'épaulement distal du segment intermédiaire, et adaptée pour pouvoir être repoussée par le flasque d'entraînement du segment mobile immédiatement adjacent déployé par rapport au segment intermédiaire, en fin de déploiement de ce segment mobile, de façon à libérer une bille de blocage portée par le segment intermédiaire et s'étendant radialement vers l'extérieur pour, en position de blocage, être logée dans un évidement du segment immédiatement adjacent vers l'extérieur à ce segment intermédiaire.

De préférence, avantageusement et selon l'invention, chaque segment comprend un corps principal formé d'un tube cylindrique de révolution en matériau composite compatible avec l'environnement spatial.

L'invention concerne également un mât caractérisé en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une vue schématique en perspective d'un mât télescopique selon l'invention en position rétractée,
- la figure 2 est une vue similaire à la figure 1 illustrant le début du déploiement du premier segment distal du mât télescopique selon l'invention,
- la figure 3 est une vue similaire à la figure 2 illustrant la fin de déploiement du premier segment distal du mât télescopique selon l'invention,
- la figure 4 est une vue schématique en perspective illustrant le mât télescopique selon l'invention de la figure 2 en position déployée,
- la figure 5 est une vue schématique en perspective partiellement arrachée du mât télescopique selon l'invention dans une position de déploiement similaire à celle de la figure 2,
- la figure 6 est une vue schématique en perspective partielle de détail illustrant une première position en fin de déploiement d'un segment mobile par rapport à un segment fixe d'un mât télescopique selon l'invention,
- la figure 7 est une vue schématique en coupe axiale partielle de détail illustrant une deuxième position de fin de déploiement d'un segment mobile par rapport à un segment fixe d'un mât télescopique selon l'invention,
- la figure 8 est une vue similaire à la figure 7 illustrant une troisième position de fin de déploiement,
- la figure 9 est une vue similaire à la figure 6 illustrant la troisième position de fin de déploiement,
- la figure 10 est une vue schématique en coupe axiale partielle de détail illustrant un mécanisme de blocage axial des segments les uns par rapport aux autres en position de blocage, selon un mode de réalisation d'un mât télescopique selon l'invention,
- la figure 11 est une vue similaire à la figure 10 illustrant le mécanisme de blocage axial en position de libération.

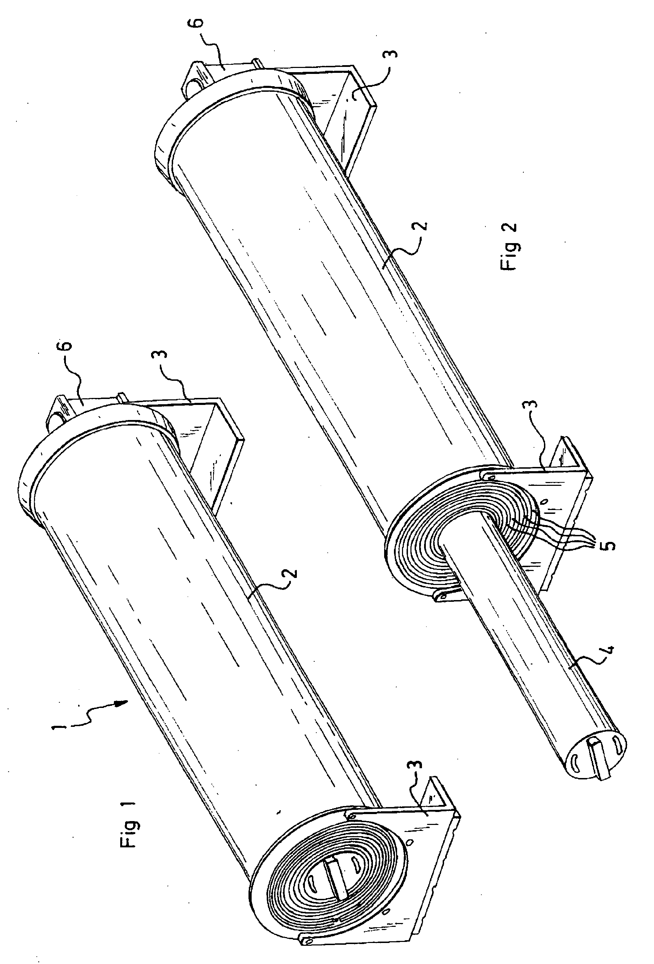

Le mât télescopique 1 selon l'invention est représenté sur la figure 1 en position totalement rétractée, c'est-à-dire dans l'état où il se trouve au moment du lancement du système spatial. Comme on le voit, ce mât télescopique comprend une pluralité de segments cylindriques creux coaxiaux imbriqués radialement les uns dans les autres, à savoir : un segment externe 2 de plus grandes dimensions radiales faisant office d'enveloppe externe du mât télescopique en position rétractée, et monté solidaire de supports 3 d'ancrage du mât 1 télescopique sur un châssis (non représenté) du système spatial ; un segment interne 4 de plus petites dimensions radiales ; et des segments intermédiaires 5 interposés radialement entre le segment interne 4 et le segment externe 2. Un mécanisme 6, 7 motorisé de déploiement axial des segments 4, 5 les uns par rapport aux autres et par rapport au segment externe 2, est associé au mât télescopique, porté à une extrémité, dite extrémité proximale 8, du segment externe 2.

Dans tout le texte, le terme « cylindrique » est utilisé au sens mathématique désignant une surface ou un volume engendré par le déplacement d'une droite conservant une direction constante, correspondant à l'axe du cylindre, sur une courbe ou une surface fermée constituant la base du cylindre. Ainsi, en particulier, chaque segment cylindrique 2, 4, 5 n'est pas nécessairement symétrique de révolution autour de son axe mais peut au contraire présenter une base polygonale ou elliptique ou autre. Cela étant, de préférence et selon l'invention, comme représenté sur les figures, chaque segment 2, 4, 5 cylindrique est formé d'un tronçon tubulaire cylindrique de révolution creux.

Par ailleurs, de façon habituelle, le terme « proximal » désigne une portion s'étendant du côté d'une extrémité du mât télescopique qui est ancrée sur un châssis (notamment sur un châssis non représenté du système spatial portant le mât), portant en général également le mécanisme 6, 7 motorisé de déploiement, tandis que le terme « distal » désigne une portion s'étendant du côté opposé, c'est-à-dire du côté de l'extrémité libre du mât 1 télescopique à l'état déployé.

Le mât 1 télescopique comprend ainsi un segment proximal formant son extrémité proximale, un segment distal formant son extrémité distale libre, et des segments intermédiaires s'étendant, en position déployée, entre le segment proximal et le segment distal. Dans le mode de réalisation représenté, le segment externe 2 constitue le segment proximal 2 du mât 1 télescopique, et le segment interne 4 constitue le segment distal 4 du mât 1 télescopique.

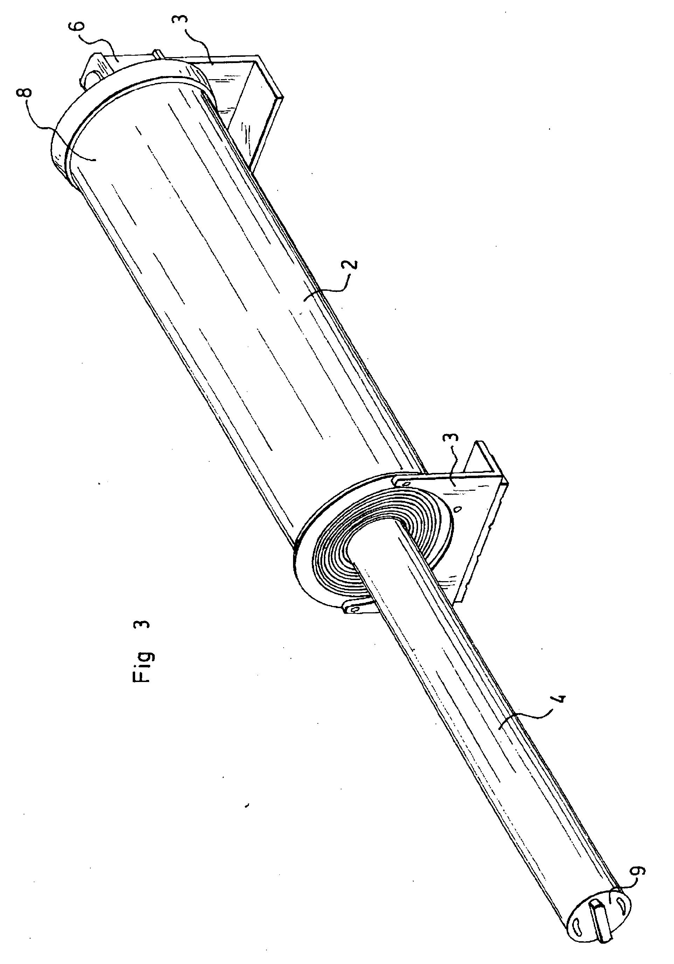

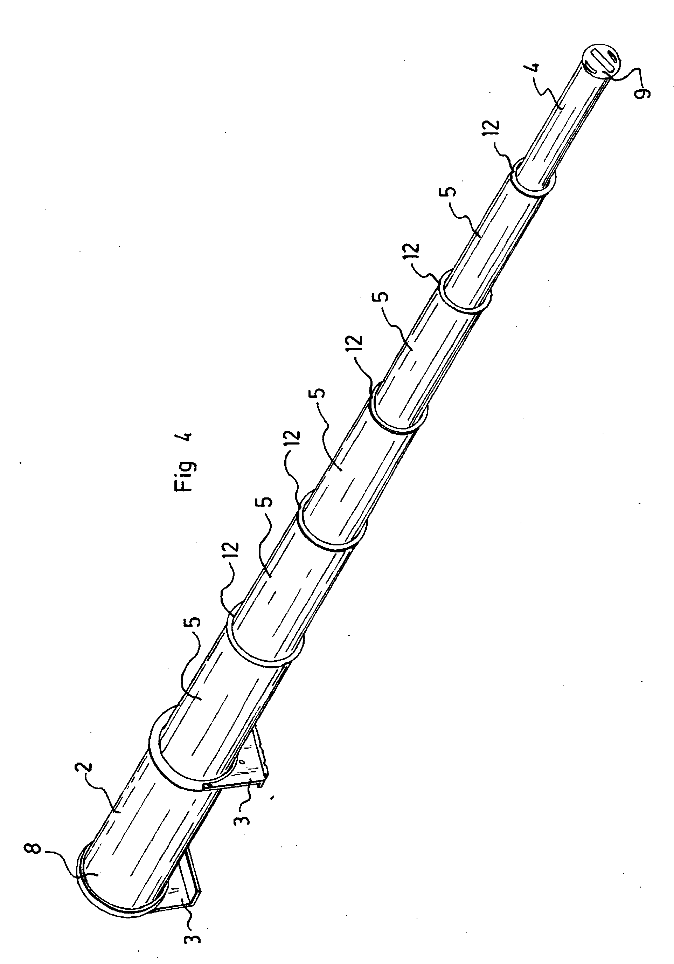

Lorsque le mécanisme motorisé de déploiement 6, 7 est activé à partir de la position entièrement rétractée de la figure 1, le segment distal 4 commence à se déployer selon l'axe de déploiement qui coïncide avec l'axe des différents segments 2, 4, 5 comme représenté figure 2. En fin de déploiement représenté figure 3, le segment distal 4 se verrouille par rapport au segment intermédiaire 5 immédiatement adjacent qui est encore fixe, et ce verrouillage entraîne une libération de ce segment intermédiaire 5 immédiatement adjacent qui peut alors lui-même commencer à se déployer axialement. Lorsque tous les segments 4, 5 se sont déployés, le mât 1 télescopique présente l'aspect représenté figure 4. L'extrémité distale 9 du segment distal 4 qui constitue l'extrémité distale du mât 1 déployé peut porter un organe (non représenté) tel qu'un capteur (magnétomètre, laser, caméra, émetteur, récepteur...). Un câble ou un faisceau de câbles (non représenté) peut être prévu pour relier ce capteur à l'extrémité proximale 8 de façon à permettre sa connexion aux autres éléments du système spatial.

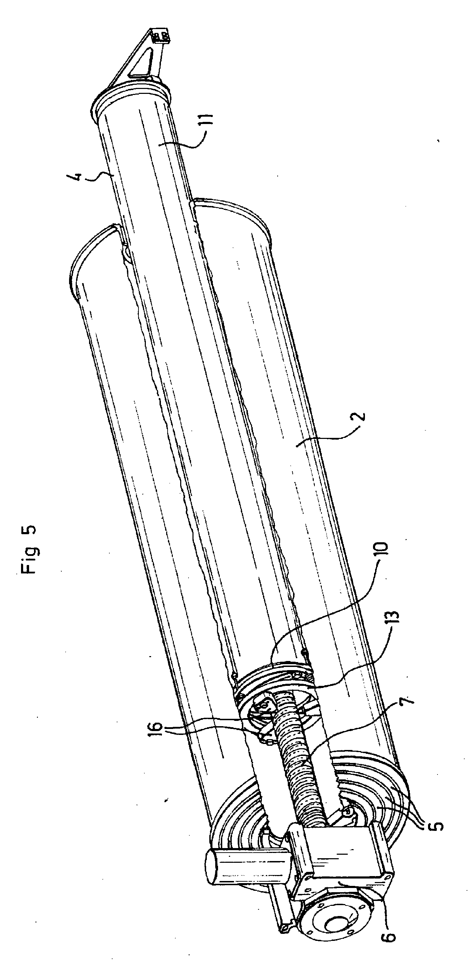

Lorsqu'un segment 4 ou 5, dit segment mobile, est en cours de déploiement, il est d'une part entraîné par le mécanisme motorisé de déploiement 6, 7, d'autre part guidé par rapport au segment 5 ou 2, dit segment fixe, immédiatement adjacent à l'extérieur du segment mobile. La figure 5 représente le cas du segment mobile formé du segment distal 4 et du segment fixe correspondant formé du segment intermédiaire 5 immédiatement adjacent à l'extérieur du segment distal 4. Il va de soi que les autres segments intermédiaires 5 sont guidés et verrouillés en position déployée de la même façon que le segment distal 4, la description qui suit à cet égard s'appliquant mutatis mutandis aux segments intermédiaires 5.

Le mécanisme motorisé de déploiement 6, 7 comprend, dans le mode de réalisation représenté, un motoréducteur 6 accouplé à une vis sans fin 7 s'étendant axialement selon l'axe de déploiement à l'intérieur du segment distal 4 sur une longueur correspondant à la longueur de chaque segment 2, 4, 5.

Chaque segment 4, 5 à déployer comprend un corps principal cylindrique tubulaire 11 creux présentant une paroi interne cylindrique 19 et une paroi externe cylindrique 20, une bague 10 d'extrémité proximale solidaire du corps 11, une bague 12 d'extrémité distale solidaire du corps 11, et un flasque d'entraînement 13 relié à la bague d'extrémité proximale 10 par des lames élastiques 14. Le segment proximal 2 comprend également un corps principal cylindrique tubulaire 11 et une bague 12 d'extrémité distale, mais est exempt de flasque d'entraînement, et son extrémité proximale 8 ne présente pas une bague similaire à celle des autres segments 4, 5. De même, l'extrémité distale 9 du segment distal 4 n'est pas nécessairement dotée d'une bague 12 d'extrémité distale similaire à celle du segment proximal 2 et des segments intermédiaires 5.

Le flasque d'entraînement 13 porte des doigts d'engrènement 16 s'étendant radialement vers l'intérieur de façon à coopérer avec la vis sans fin 7 et à être entraînés axialement par cette dernière dans le sens du déploiement lorsqu'elle est mise en rotation par le motoréducteur 6.

Le flasque d'entraînement 13 s'étend à l'amont de la bague 10 d'extrémité proximale (par rapport au sens de déploiement des segments 4, 5) et est maintenu à distance de cette dernière par les lames élastiques 14 et des ressorts hélicoïdaux de compression 15 interposés entre ce flasque d'entraînement 13 et la bague 10 d'extrémité proximale.

Ainsi, la rotation de la vis sans fin 7 entraîne les doigts d'engrènement 16, et donc le flasque d'entraînement 13 et, via les lames élastiques 14 et les ressorts de compression 15, la bague 10 d'extrémité proximale et donc l'ensemble du segment mobile. Néanmoins, à partir d'une certaine valeur d'effort de rapprochement axial exercé entre le flasque d'entraînement 13 et la bague 10 d'extrémité proximale, ces deux éléments peuvent se rapprocher l'un de l'autre axialement à l'encontre du rappel élastique axial imparti par les lames élastiques 14 et les ressorts 15.

Le flasque d'entraînement 13 et la bague 10 d'extrémité proximale présentent une paroi extérieure 17, respectivement 18, cylindrique autour de l'axe de déploiement, et ces parois 17, 18 présentent un diamètre externe correspondant au diamètre interne de la paroi interne 19 du corps principal 11 du segment fixe, de sorte que le segment mobile est guidé axialement au cours du déploiement dans le segment fixe par ces parois 17, 18 du flasque d'entraînement 13 et de la bague 10 d'extrémité proximale qui glissent dans la paroi interne 19.

Par contre, le diamètre externe des parois 17, 18 du flasque d'entraînement 13 de la bague 10 d'extrémité proximale est supérieur au diamètre externe de la paroi externe 20 du corps principal 11 du segment mobile. Il en va de même également du diamètre interne de la paroi interne 19 du corps principal 11 du segment fixe. De la sorte, un jeu radial est ménagé entre la paroi externe 20 du corps principal 11 du segment mobile et la paroi interne 19 du corps principal 11 du segment fixe.

La bague 12 d'extrémité distale du segment fixe est emmanchée sur le corps principal 11, et présente à cet effet une jupe 21 qui est engagée dans l'extrémité distale de la paroi interne 19 du corps principal 11. La jupe 21 s'étend sur une faible longueur axiale, et présente elle-même une paroi interne 22 cylindrique dont le diamètre est également supérieur au diamètre de la paroi externe 20 du corps principal du segment mobile. De la sorte, un jeu radial est également ménagé entre la jupe 21 et le corps principal 11 du segment mobile.

La jupe 21 forme, à son extrémité axiale proximale (c'est-à-dire orientée vers l'extrémité proximale du segment fixe), un épaulement radial, dit épaulement distal 24, solidaire du segment fixe et disposé à l'extrémité distale de ce dernier. Cet épaulement distal 24 est orienté vers l'extrémité proximale du segment fixe, c'est-à-dire dans le sens opposé au sens de déploiement. La bague 10 d'extrémité proximale du segment mobile forme également un épaulement radial, dit épaulement proximal 25, solidaire du corps principal 11 du segment mobile, s'étendant radialement à l'extérieur de ce dernier. L'épaulement proximal 25 est orienté vers l'extrémité distale du segment mobile, c'est-à-dire dans le sens de déploiement. L'épaulement distal 24 du segment fixe et l'épaulement proximal 25 du segment mobile sont adaptés pour pouvoir venir en contact l'un avec l'autre en fin de déploiement du segment mobile par rapport au segment fixe, l'épaulement proximal 25 s'étendant à l'amont de l'épaulement distal 24 par rapport au sens de déploiement, de façon à former ainsi une butée axiale de déploiement des deux segments l'un par rapport à l'autre. Cette butée axiale interdit tout déploiement du segment mobile au-delà d'une certaine position axiale du segment mobile où les deux épaulements 24, 25 viennent en contact l'un de l'autre.

En outre, ces épaulements radiaux 24, 25 comprenant de préférence chacun une paroi en forme de couronne plane s'étendant dans un plan transversal radial à l'axe de déploiement imposent, lorsqu'ils sont en contact l'un avec l'autre, un positionnement axial précis, sans jeu des deux segments l'un par rapport à l'autre, et garantissent un parfait alignement des deux segments selon l'axe de déploiement, sans jeu ni possibilité de déplacement angulaire intempestif.

De préférence, dans le mode de réalisation représenté, la bague 10 d'extrémité proximale comprend également une jupe 27 adaptée pour pouvoir être emmanchée dans la jupe 21 de la bague 12 d'extrémité distale du segment fixe, cette jupe 27 de la bague 10 d'extrémité proximale présentant une paroi externe cylindrique venant au contact de la paroi interne cylindrique 22 de la jupe 21 de la bague 12 d'extrémité distale. En outre, avantageusement, la jupe 27 de la bague 10 d'extrémité proximale présente un chanfrein 29 et/ou la jupe 21 de la bague 12 d'extrémité distale présente un lamage 30 facilitant l'introduction de la jupe 27 dans la jupe 21. Les deux jupes 21, 27 en contact par leur paroi cylindrique ont également pour effet d'ajuster l'orientation axiale relative des deux segments l'un par rapport à l'autre et de les maintenir alignés selon l'axe de déploiement.

Le mât 1 télescopique comprend également des verrous répartis à la périphérie de la jonction de deux segments adjacents en position déployée. Les verrous sont adaptés pour imprimer une contrainte résiduelle permanente de serrage élastique axial des deux épaulements 24, 25 en contact l'un avec l'autre, ce qui permet d'une part d'assurer une forme et des dimensions précises au mât à l'état déployé comme indiqué ci-dessus, d'autre part de permettre néanmoins de soumettre le mât 1 télescopique selon l'invention à des efforts et variations d'efforts, des dilatations ou contractions thermiques, des effets thermoélastiques divers, en garantissant le maintien des caractéristiques mécaniques, de la forme et des dimensions générales du mât 1.

Chaque verrou comprend un doigt de crochetage 23 solidaire du flasque d'entraînement 13 du segment mobile correspondant, s'étendant axialement à l'extérieur du corps principal l de ce segment mobile dans le sens du déploiement. Chaque doigt de crochetage 23 traverse librement une lumière 26 ménagée à travers la bague 10 d'extrémité proximale, de façon à pouvoir coulisser en translation axiale librement par rapport à cette bague 10, et donc par rapport à l'épaulement proximal 25 formé par cette bague 10.

Chaque doigt de crochetage 23 comprenant une tige principale 32 qui présente une extrémité proximale solidaire du flasque d'entraînement 13, s'étend à travers un ressort 15 hélicoïdal de compression, traverse une lumière 26 de la bague 10 d'extrémité proximale, et s'étend axialement au-delà de l'épaulement proximal 25 à l'extérieur du corps principal 11 du segment mobile sur une certaine longueur. Le doigt de crochetage 23 présente également une extrémité libre distale 33 prolongeant la tige principale 32, cette extrémité 33 formant crochet de façon à pouvoir être crochetée en prise avec une portée de verrouillage 31 de la bague 12 d'extrémité distale du segment fixe, c'est-à-dire solidaire de l'épaulement distal 24. Dans l'exemple représenté, l'extrémité 33 du doigt de crochetage 23 est en forme de pointe conique comprenant une partie extrême conique 34 prolongeant une portion cylindrique 35 de diamètre supérieur au diamètre de la tige principale 32.

Le doigt de crochetage 23 est disposé par rapport au flasque d'entraînement 13 et par rapport à la bague 10 d'extrémité proximale du segment mobile de façon que la tige principale 32 s'engage librement dans une rainure 42 ménagée à cet effet dans la jupe 21 de la bague 12 d'extrémité distale du segment fixe, mais puisse être fléchie élastiquement vers le corps principal 11 du segment mobile de telle sorte que son extrémité 33 formant crochet puisse également passer dans la rainure 42 de la jupe 21. En effet, le diamètre de la portion cylindrique 35 de l'extrémité 33 du doigt de crochetage 23 est tel qu'il nécessite la déformation élastique en flexion de la tige 32 vers l'intérieur radialement pour permettre le passage de l'extrémité 33 axialement dans la rainure 42 de la jupe 21 de la butée 12 d'extrémité distale du segment fixe.

La portée de verrouillage 31 de la bague 12 d'extrémité distale du segment fixe est formée par exemple d'un épaulement plan radial transversal s'étendant radialement vers l'extérieur à partir de la paroi interne 22 de la jupe 21, à l'extrémité distale de cette dernière, et orienté dans le sens de déploiement. Ainsi, lorsque l'extrémité 33 du doigt de crochetage 23 débouche axialement au-delà de la jupe 21 de la bague 12 d'extrémité distale, jusqu'à ce que la portion cylindrique 35 de cette extrémité 33 dépasse la portée de verrouillage 31, la tige 32 du doigt de crochetage 23 est rappelée élastiquement en flexion dans sa position de repos vers l'extérieur, de telle sorte que cette portion cylindrique 35 vient en butée axiale contre la portée 31 de verrouillage, interdisant tout déplacement ultérieur relatif du doigt de crochetage 23 par rapport à la butée 12 d'extrémité distale, et donc par rapport à l'épaulement distal 24 dans le sens opposé au sens de déploiement.

La longueur de chaque doigt de crochetage 23 est par ailleurs adaptée pour que le crochetage de ce doigt 23 avec ladite portée de verrouillage 31 1 nécessite une course de déploiement axial de flasque d'entraînement 13 à l'encontre du rappel élastique imparti par les lames élastiques 14 et les ressorts hélicoïdaux 15 au-delà de la position où les épaulements 24, 25 arrivent en contact de butée axiale, de sorte que, après crochetage, les lames élastiques 14 et les ressorts hélicoïdaux 15 maintiennent les deux épaulements 24, 25 serrés axialement l'un contre l'autre avec une contrainte résiduelle permanente de serrage élastique axial.

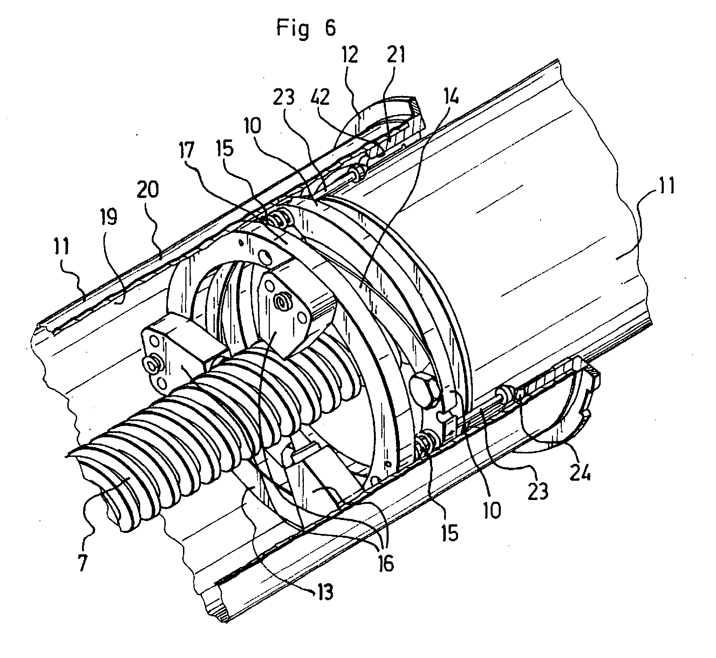

Ainsi, la figure 6 représente la position dans laquelle les deux épaulements 24, 25 ne sont pas encore en contact l'un avec l'autre, mais l'extrémité 33 de chaque doigt de crochetage 23 vient accoster l'extrémité chanfreinée de la jupe 21.

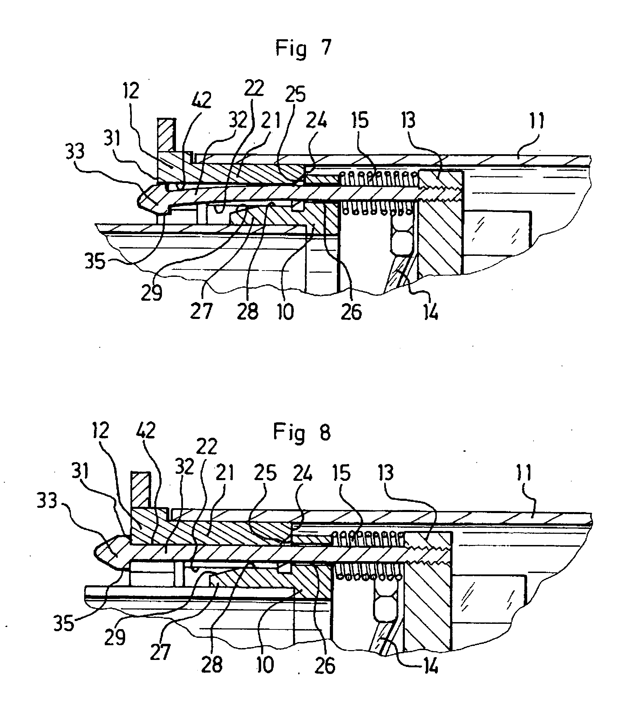

Les extrémités 33 des doigts de crochetage 23 sont ensuite passées à l'intérieur de la jupe 21, imposant une flexion élastique radialement vers l'intérieur des tiges 32 des doigts de crochetage 23, comme représenté sur la figure 7 qui représente la position dans laquelle les deux épaulements 24, 25 sont arrivés en contact de butée axiale l'un contre l'autre. À ce stade, les ressorts 15 et les lames 14 ne sont pas comprimés élastiquement.

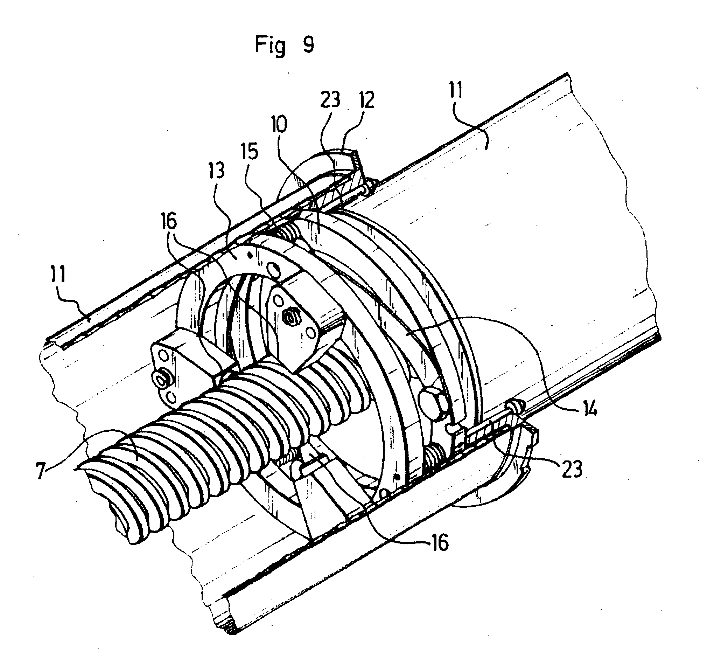

La vis sans fin 7 continuant sa rotation, le flasque d'entraînement 13 continue à se déplacer axialement dans le sens de déploiement, ce par quoi les lames élastiques 14 et les ressorts de compression 15 sont comprimés avec une certaine variation de distance axiale (dans le sens de leur rapprochement) entre le flasque d'entraînement 13 et la bague 10 d'extrémité proximale, et ce jusqu'à ce que l'extrémité libre 33 de chaque doigt de crochetage 23 dépasse la portée de verrouillage 31 et soit crochetée en prise avec cette portée 31 comme expliqué ci-dessus (position des figures 8 et 9). Dans cette position, le segment mobile a terminé sa course de déploiement axial et est verrouillé en place par rapport au segment fixe grâce notamment aux deux épaulements 24, 25 en butée axiale et aux doigts de crochetage 23, les lames 14 élastiques et les ressorts hélicoïdaux de compression 15 maintenant une contrainte permanente élastique de serrage axial.

Il est à noter que la valeur de cette contrainte permanente résiduelle peut être ajustée en fonction d'une part de la raideur des lames élastiques 14 et des ressorts de compression 15, d'autre part du déplacement imparti à ces organes élastiques 14, 15 à partir de leur forme au repos entre la position de butée axiale des épaulements 24, 25 et la position de crochetage des doigts de crochetage 23.

Le verrouillage obtenu par les doigts de crochetage 23 empêche aussi toute rétraction intempestive ultérieure du segment mobile par rapport au segment fixe. Ce verrouillage est irréversible en ce sens qu'une fois le segment mobile déployé et les doigts de crochetage 23 verrouillés, aucune possibilité de dissociation des doigts de crochetage 23 par rapport à la portée de verrouillage 31 n'est prévue.

De préférence, une pluralité de doigts de crochetage 23 sont uniformément répartis autour de l'axe du segment mobile correspondant. Dans l'exemple représenté sur les figures, trois doigts de crochetage 23 sont prévus, à 120° les uns des autres.

Dans la position verrouillée représentée figures 8 et 9, ou dans une position correspondant à un faible déplacement axial subséquent du flasque d'entraînement 13 dans le sens de déplacement, le segment fixe est libéré de façon à permettre son déploiement ultérieur (à moins qu'il ne s'agisse du segment externe proximal 2, qui n'a pas à être déployé).

À cet effet, le mât 1 télescopique selon l'invention comprend, pour chaque segment intermédiaire 5, un mécanisme 36, 39, 40 de blocage axial de ce segment intermédiaire 5 par rapport au segment qui lui est immédiatement adjacent du côté du segment proximal 2, ce mécanisme 36, 39, 40 de blocage axial étant adapté pour pouvoir être libéré en fin de déploiement du segment 4, 5 immédiatement adjacent à ce segment intermédiaire 5 du côté du segment distal 4.

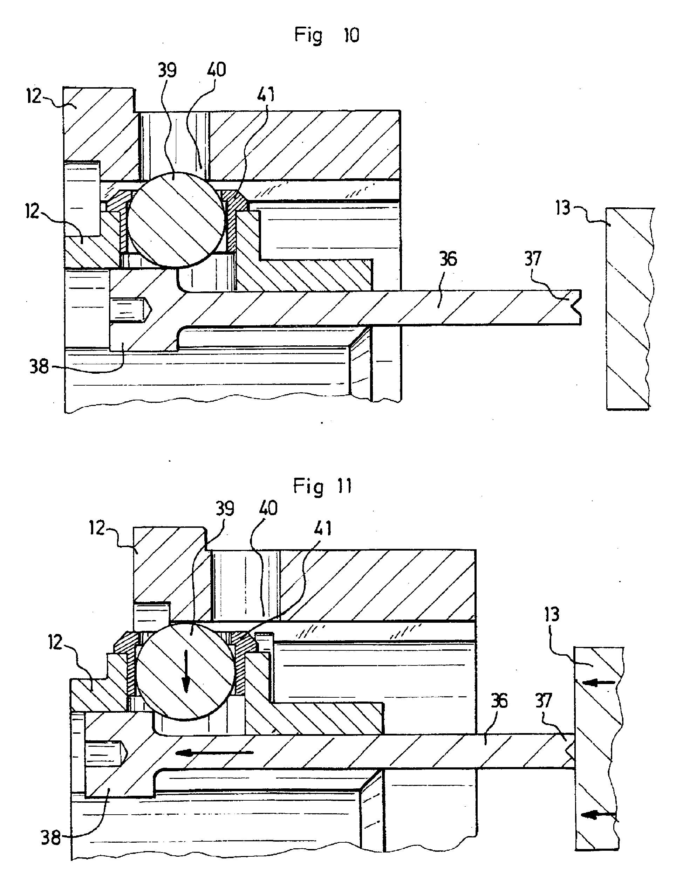

Un mode de réalisation de ce mécanisme 36, 39, 40 de blocage axial est représenté plus en détail sur les figures 10 et 11. Le mécanisme comprend une tige de commande 36 guidée en translation axiale par rapport à la bague 12 d'extrémité distale du segment fixe intermédiaire 5. La tige de commande 36 s'étend au-delà de la bague 12 d'extrémité distale de façon à présenter une extrémité proximale 37 adaptée à venir au contact du flasque d'entraînement 13 du segment mobile en fin de déploiement. La tige de commande 36 présente une extrémité distale 38 élargie de façon à repousser radialement vers l'extérieur une bille 39 logée dans un évidement 40 ménagé en creux dans la bague 12 d'extrémité distale du segment adjacent vers l'extérieur.

Dans la position initiale représentée figure 10, la tige de commande 36 est dans sa position proximale dans laquelle l'extrémité 38 élargie maintient la bille 39 dans l'évidement 40, le segment fixe étant bloqué axialement. Dans la position représentée figure 11, le flasque d'entraînement 13 du segment mobile est venu au contact de l'extrémité proximale 37 de la tige 36 de commande, et a repoussé cette dernière axialement dans le sens du déploiement, ce par quoi la bille 39 peut se déplacer radialement vers l'intérieur en se dégageant de l'évidement 40, libérant ainsi la bague 12 d'extrémité distale du segment fixe par rapport à la bague 12 d'extrémité distale du segment adjacent vers l'extérieur à ce segment fixe. Dès lors, le segment fixe devient mobile et peut être ensuite entraîné axialement dans le sens du déploiement par la rotation de la vis sans fin 7.

La bille 39 de blocage est portée par la bague 12 d'extrémité distale du segment fixe intermédiaire 5 et entraînée avec cette dernière, grâce à un écrou 41 logeant la bille 39 en permettant ses mouvements dans la direction radiale entre les positions de blocage et de libération. Bien sûr, si nécessaire, des ressorts de rappel peuvent être prévus (non représenté) d'une part pour rappeler la tige de commande 36 dans sa position proximale de blocage, d'autre part pour rappeler la bille 39 radialement vers l'intérieur de façon à garantir la libération lorsque la tige de commande 36 est repoussée par le flasque d'entraînement 13.

De préférence, la libération du mécanisme 36, 39, 40 de blocage axial par le flasque d'entraînement 13 du segment mobile intervient en fin de déploiement de ce dernier, dans une position où les doigts de crochetage 23 du segment mobile sont déjà verrouillés contre la portée 31 de verrouillage. Pour des raisons d'encombrement, le mécanisme 36, 39, 40 de blocage axial est disposé dans un plan axial de la bague 12 d'extrémité distale du segment fixe qui n'est pas un plan axial contenant un doigt de crochetage 23 du segment mobile.

Lorsque le segment fixe est ainsi libéré, le déplacement axial ultérieur dans le sens du déploiement du flasque d'entraînement 13 du segment initialement mobile, maintenant déployé et verrouillé en place par rapport à ce segment libéré (sous l'effet de la rotation de la vis sans fin 7), a alors pour effet d'entraîner axialement ce segment libéré simultanément au segment initialement mobile. Le flasque d'entraînement 13 du segment libéré disposé à l'extrémité proximale de ce dernier, qui n'était pas engrené avec la vis sans fin 7 lorsqu'il était fixe et bloqué par le mécanisme 36, 39, 40, se déplace alors également dans le sens du déploiement jusqu'à ce que les doigts d'entraînement 16 qu'il porte viennent également engrener avec la vis sans fin 7, et donc poursuivre le déploiement du segment, qui devient ainsi un segment mobile. À partir d'une certaine position de déploiement du flasque d'entraînement 13 du segment initialement mobile, ce dernier dépasse l'extrémité distale de la vis sans fin 7, et les doigts d'entraînement 16 qu'il porte se dégagent alors de cette vis 7 et ne sont plus entraînés par cette dernière.

Le même procédé de déploiement se déroule pour les différents segments à déployer. Lorsque l'avant-dernier segment 5 adjacent au segment proximal 2 est totalement déployé et verrouillé, un dispositif de fin de course, par exemple un interrupteur permet d'interrompre le motoréducteur 6.

Il va de soi que l'invention peut faire l'objet de très nombreuses variantes de réalisation par rapport au mode de réalisation préférentiel représenté sur les figures et décrit ci-dessus. Par exemple, la forme des doigts de crochetage peut être différente. Plus généralement, d'autres dispositifs de verrouillage peuvent être prévus pour maintenir les épaulements en contact axial l'un avec l'autre. Également, les doigts d'engrènement, les flasques d'entraînement, les bagues d'extrémité, peuvent faire l'objet de différentes formes de réalisation. L'invention est également applicable avec un mécanisme de déploiement autre, par exemple à courroie.

## Revendications

1. Mât télescopique de système spatial comprenant :
- une pluralité de segments (2, 4, 5) cylindriques coaxiaux imbriqués radialement les uns dans les autres,
- un mécanisme (6, 7) motorisé de déploiement axial des segments (4, 5) à partir d'une position rétractée initiale où ils sont rétractés les uns dans les autres, jusqu'à une position déployée où ils sont entièrement déployés en prolongement axial les uns des autres,
- à la jonction de chaque paire de segments (2, 4, 5) adjacents déployés, un dispositif de blocage axial et de verrouillage automatique l'un par rapport à l'autre des deux segments déployés,
ledit dispositif de blocage axial et de verrouillage comprenant :
- un épaulement radial, dit épaulement proximal (25), solidaire d'un segment, dit segment mobile, à déployer par rapport à un autre segment, dit segment fixe, et
- un épaulement radial, dit épaulement distal (24), solidaire du segment fixe, ces deux épaulements proximal (25) et distal (24) étant adaptés pour venir en contact en fin de déploiement du segment mobile par rapport au segment fixe, l'épaulement proximal(25) étant à l'amont de l'épaulement distal (24) par rapport au sens de déploiement, de façon à former une butée axiale de déploiement des deux segments, **caractérisé en ce que** ledit dispositif de blocage axial et de verrouillage comprend
une pluralité de verrous (23, 31) répartis à la périphérie de la jonction,
- et **en ce que** les verrous (23, 31) sont répartis à la périphérie des épaulements (24, 25) en contact et adaptés pour les serrer l'un contre l'autre axialement avec une contrainte résiduelle permanente de serrage élastique axial.

2. Mât selon la revendication 1, **caractérisé en ce que** :
- il comprend, pour chaque segment mobile, un flasque d'entraînement (13) solidaire du segment mobile et entraîné en translation axiale de déploiement par le mécanisme (6, 7) motorisé de déploiement axial,
- chaque verrou (23, 31) comprend :
- un doigt de crochetage (23) s'étendant axialement au-delà de l'épaulement proximal (25) du segment mobile dans le sens de déploiement, ce doigt de crochetage (23) étant solidaire du flasque d'entraînement(13) et adapté pour pouvoir être crocheté en prise avec une portée de verrouillage (31) solidaire de l'épaulement distal (24) du segment fixe, ce par quoi tout déplacement ultérieur relatif du doigt de crochetage (23) par rapport à l'épaulement distal (24) du segment fixe dans le sens opposé au sens de déploiement est interdit,
- au moins un ressort (14, 15), dit ressort de serrage axial (14, 15), interposé entre le flasque d'entraînement (13) et l'épaulement proximal (25) du segment mobile de façon à rappeler le flasque d'entraînement (13) et chaque doigt de crochetage (23) par rapport à l'épaulement proximal (25) du segment mobile axialement dans le sens opposé au sens de déploiement,
- la longueur de chaque doigt de crochetage (23) étant adaptée pour que le crochetage (23) de ce doigt avec ladite portée de verrouillage (31) du segment fixe nécessite une course de déploiement du flasque d'entraînement (13) à l'encontre de chaque ressort de serrage axial (14, 15), au-delà de sa position où les épaulements (24, 25) arrivent en contact de butée axiale.

3. Mât selon la revendication 2, **caractérisé en ce que** :
- le flasque d'entraînement (13) est à l'amont de l'épaulement proximal (25) du segment mobile,
- chaque ressort de serrage axial (14, 15) est un ressort de compression tendant à écarter le flasque d'entraînement (13) de l'épaulement proximal (25).

4. Mât selon l'une des revendications 2 ou 3, **caractérisé en ce que** chaque segment mobile présente un corps (11) principal tubulaire de dimension radiale inférieure à la dimension radiale du flasque d'entraînement (13), et **en ce que** chaque doigt de crochetage (23) du segment mobile s'étend axialement à l'extérieur du corps (11) principal tubulaire et est formé d'une tige (32) élastiquement flexible au moins radialement vers l'intérieur présentant une extrémité libre (33) formant crochet, de sorte que le crochetage de chaque doigt de crochetage (23) du segment mobile avec ladite portée de verrouillage (31) de l'épaulement distal (24) du segment fixe intervient par déformation élastique en flexion radialement vers l'intérieur du doigt de crochetage (23).

5. Mât selon la revendication 4, **caractérisé en ce que** l'extrémité libre de chaque doigt de crochetage (23) présente au moins une portée (34) inclinée par rapport à l'axe du doigt de crochetage (23), cette portée inclinée (34) s'étendant radialement vers l'extérieur au-delà de la tige (32) formant le doigt de crochetage (23) et étant adaptée pour venir au contact d'une paroi interne (22) solidaire de l'épaulement distal (24) du segment fixe, ladite portée inclinée (34) s'étendant radialement jusqu'à une distance de l'axe du mât supérieure à la distance entre ladite paroi interne (22) et l'axe du mât, de façon à entraîner, sous l'effet du déploiement, la déformation en flexion élastique du doigt de crochetage (23).

6. Mât selon l'une des revendications 2 à 5, **caractérisé en ce que** chaque doigt de crochetage (23) et ladite portée de verrouillage (31) du segment fixe sont adaptés pour former un verrouillage normalement irréversible du doigt de crochetage (23) par rapport à l'épaulement distal (24) du segment fixe.

7. Mât selon l'une des revendications 2 à 6, **caractérisé en ce que** le mécanisme (6, 7) motorisé de déploiement axial des segments comprend une vis sans fin (7) axiale centrale et, pour chaque segment à déployer, des doigts d'engrènement (16) portés par le flasque d'entraînement (13) et s'étendant radialement vers l'intérieur pour pouvoir coopérer par engrènement avec cette vis centrale (7).

8. Mât selon l'une des revendications 1 à 7, **caractérisé en ce que** chaque épaulement proximal (25) et chaque épaulement distal (24) comprend une paroi en forme de couronne plane s'étendant dans un plan transversal radial à l'axe de déploiement.

9. Mât selon l'une des revendications 1 à 8, **caractérisé en ce que** le segment mobile s'étend radialement à l'intérieur du segment fixe, l'épaulement proximal (25) du segment mobile s'étendant radialement vers l'extérieur par rapport à une paroi externe cylindrique (20) de corps principal du segment mobile, l'épaulement distal (24) du segment fixe s'étendant radialement vers l'intérieur par rapport à une paroi interne cylindrique (19) de corps principal du segment fixe.

10. Mât selon l'une des revendications 1 à 9, **caractérisé en ce qu'**il comprend :
- un segment proximal (2) solidaire du mécanisme (6, 7) motorisé de déploiement,
- un segment distal (4) dont l'extrémité distale (9) forme l'extrémité libre distale du mât en position déployée,
- au moins un segment intermédiaire (5) interposé radialement entre le segment proximal (2) et le segment distal (4),
- pour chaque segment intermédiaire (4), un mécanisme (36, 39, 40) de blocage axial de ce segment (5) intermédiaire par rapport au segment qui lui est immédiatement adjacent du côté du segment proximal, ce mécanisme (36, 39, 40) de blocage axial étant adapté pour pouvoir être libéré en fin de déploiement du segment immédiatement adjacent au segment (5) intermédiaire du côté du segment distal.

11. Mât selon la revendication 10, **caractérisé en ce que** le mécanisme (36, 39, 40) de blocage axial comprend une tige de commande (36) guidée en translation axiale par rapport à l'épaulement distal (24) du segment intermédiaire (5), et adaptée pour pouvoir être repoussée par le flasque d'entraînement (13) du segment mobile immédiatement adjacent déployé par rapport au segment intermédiaire (5), en fin de déploiement de ce segment mobile, de façon à libérer une bille (39) de blocage portée par le segment intermédiaire (5) et s'étendant radialement vers l'extérieur pour, en position de blocage, être logée dans un évidement (40) du segment immédiatement adjacent vers l'extérieur à ce segment intermédiaire (5).

12. Mât selon l'une des revendications 1 à 11, **caractérisé en ce que** chaque segment (2, 4, 5) comprend un corps (11) principal formé d'un tube cylindrique de révolution en matériau composite compatible avec l'environnement spatial.

## Claims

1. Telescopic mast for a spatial system, comprising:
- a plurality of coaxial cylindrical segments (2, 4, 5) which are imbricated radially in one another;
- a motorised mechanism (6, 7) for axial deployment of the segments (4, 5), from an initial retracted position, in which they are retracted in one another, to a deployed position in which they are fully deployed in axial extension of one another;
- at the junction of each pair of adjacent deployed segments (2, 4, 5), a device for axial blocking and automatic locking relative to one another of the two deployed segments,
the said axial blocking and locking device comprising:
- a radial shoulder, known as the proximal shoulder (25) which is integral with a segment, known as the mobile segment, to be deployed relative to another segment, known as the fixed segment; and
- a radial shoulder, known as the distal shoulder (24), which is integral with the fixed segment, these two proximal (25) and distal (24) shoulders being designed to come into contact at the end of deployment of the mobile segment relative to the fixed segment, the proximal shoulder (25) being upstream from the distal shoulder (24) relative to the direction of deployment, such as to form an axial deployment stop for the two segments, **characterised in that** the said axial blocking and locking device comprises a plurality of locks (23, 31) which are distributed on the periphery of the junction;
- and **in that** the locks (23, 31) are distributed on the periphery of the shoulders (24, 25) in contact, and designed to clamp the latter against one another axially with permanent residual axial resilient clamping stress.

2. Mast according to claim 1, **characterised in that**:
- it comprises, for each mobile segment, a drive flange (13) which is integral with the mobile segment, and is driven in axial deployment translation by the motorised axial deployment mechanism (6, 7);
- each lock (23, 31) comprises:
- a hooking finger (23) which extends axially beyond the proximal shoulder (25) of the mobile segment in the direction of deployment, this hooking finger (23) being integral with the drive flange (13) and designed to be able to be hooked in engagement with a locking bearing surface (31) which is integral with the distal shoulder (24) of the fixed segment, such that any further relative displacement of the hooking finger (23) in relation to the distal shoulder (24) of the fixed segment in the direction opposite to the direction of deployment is prevented;
- at least one spring (14, 15), known as the axial clamping spring (14, 15), which is interposed between the drive flange (13) and the proximal shoulder (25) of the mobile segment, such as to return the drive flange (13) and each hooking finger (23) relative to the proximal shoulder (25) of the mobile segment, axially in the direction opposite to the direction of deployment,
- the length of each hooking finger (23) being designed such that the hooking (23) of this finger with the said locking bearing surface (31) of the fixed segment requires a course of deployment of the drive flange (13) against each axial clamping spring (14, 15), beyond its position in which the shoulders (24, 25) come into contact with the axial stop.

3. Mast according to claim 2, **characterised in that**:
- the drive flange (13) is upstream from the proximal shoulder (25) of the mobile segment; and
- each axial clamping spring (14, 15) is a compression spring which tends to move the drive flange (13) away from the proximal shoulder (25).

4. Mast according to one of claims 2 or 3, **characterised in that** each mobile segment has a main tubular body (11) with a radial dimension which is smaller than the radial dimension of the drive flange (13), and **in that** each hooking finger (23) of the mobile segment extends axially on the exterior of the main tubular body (11) and is formed by a rod (32) which is resiliently flexible at least radially towards the interior, and has a free end (33) which forms a hook, such that the hooking of each hooking finger (23) of the mobile segment with the said locking bearing surface (31) of the distal shoulder (24) of the fixed segment takes place by resilient deformation in flexure radially towards the interior of the hooking finger (23).

5. Mast according to claim 4, **characterised in that** the free end of each hooking finger (23) has at least one bearing surface (34) which is inclined relative to the axis of the hooking finger (23), this inclined bearing surface (34) extending radially towards the exterior, beyond the rod (32) which forms the hooking finger (23) and being designed to come into contact with an inner wall (22) which is integral with the distal shoulder (24) of the fixed segment, the said inclined bearing surface (34) extending radially to a distance from the axis of the mast which is greater than the distance between the said inner wall (22) and the axis of the mast, such as, under the effect of the deployment, to give rise to the resilient flexure deformation of the hooking finger (23).

6. Mast according to one of claims 2 to 5, **characterised in that** each hooking finger (23) and the said locking bearing surface (31) of the fixed segment are designed to form locking of the hooking finger (23) which is normally irreversible in relation to the distal shoulder (24) of the fixed segment.

7. Mast according to one of claims 2 to 6, **characterised in that** the motorised axial deployment mechanism (6, 7) of the segments comprises a central axial endless screw (7), and, for each segment to be deployed, meshing fingers (16) which are supported by the drive flange (13), and extend radially towards the interior, in order to be able to co-operate by meshing with this central screw (7).

8. Mast according to one of claims 1 to 7, **characterised in that** each proximal shoulder (25) and each distal shoulder (24) comprises a wall in the form of a flat ring which extends on a plane which is radially transverse relative to the axis of deployment.

9. Mast according to one of claims 1 to 8, **characterised in that** the mobile segment extends radially on the interior of the fixed segment, the proximal shoulder (25) of the mobile segment extending radially toward the exterior relative to a cylindrical main body outer wall (20) of the mobile segment, the distal shoulder (24) of the fixed segment extending radially towards the interior relative to a cylindrical main body inner wall (19) of the fixed segment.

10. Mast according to one of claims 1 to 9, **characterised in that** it comprises:
- a proximal segment (2) which is integral with the motorised deployment mechanism (6, 7);
- a distal segment (4), the distal end (9) of which forms the free distal end of the mast in the deployed position;
- at least one intermediate segment (5) which is interposed radially between the proximal segment (2) and the distal segment (4);
- for each intermediate segment (4), a mechanism (36, 39, 40) for axial blocking of this intermediate segment (5) relative to the segment which is immediately adjacent to it on the proximal segment side, this axial blocking mechanism (36, 39, 40) being designed to be able to be released at the end of deployment of the segment which is immediately adjacent to the intermediate segment (5) on the distal segment side.

11. Mast according to claim 10, **characterised in that** the axial blocking mechanism (36, 39, 40) comprises a control rod (36) which is guided in axial translation relative to the distal shoulder (24) of the intermediate segment (5), and is designed to be able to be thrust back by the drive flange (13) of the immediately adjacent mobile segment which is deployed relative to the intermediate segment (5), at the end of deployment of this mobile segment, such as to release a blocking ball (39) which is supported by the intermediate segment (5), and extends radially towards the exterior, in order, in the blocking position, to be accommodated in a recess (40) of the immediately adjacent segment, towards the exterior of this intermediate segment (5).

12. Mast according to one of claims 1 to 11, **characterised in that** each segment (2, 4, 5) comprises a main body (11) which is formed by tube which is cylindrical in revolution, made of a composite material which is compatible with the spatial environment.

## Patentansprüche

1. Teleskopmast eines Raumsystems, der Folgendes umfasst:
- eine Vielzahl von zylindrischen, koaxialen Segmenten (2, 4, 5), die radial ineinander greifen,
- einen motorisierten Mechanismus (6, 7) zum axialen Ausfahren der Segmente (4, 5) ausgehend von einer eingefahrenen anfänglichen Position, in der sie ineinander eingefahren sind, bis zu einer ausgefahrenen Position, in der sie komplett in axialer Verlängerung jeweils voneinander ausgefahren sind,
- an der Verbindung jedes anliegenden, ausgefahrenen Segmentpaares (2, 4, 5) eine axiale Sperr- und automatische Verriegelungsvorrichtung jeweils zueinander der zwei ausgefahrenen Segmente,
wobei die genannte axiale Sperr- und Verriegelungsvorrichtung Folgendes umfasst:
- einen radialen Ansatz, bezeichnet als proximaler Ansatz (25), der mit einem Segment, bezeichnet als mobiles Segment, fest verbunden ist, das im Verhältnis zu einem anderen Segment, bezeichnet als festes Segment, auszuführen ist, und
- einen radialen Ansatz, bezeichnet als distaler Ansatz (24), der mit dem festen Segment fest verbunden ist, wobei diese zwei proximalen (25) und distalen (24) Ansätze angepasst sind, um am Ende des Ausfahrens des mobilen Segments im Verhältnis zum festen Segment in Kontakt zu treten, wobei der proximale Ansatz (25) sich oberhalb des distalen Ansatzes (24) im Verhältnis zur Ausfahrrichtung derart befindet, dass ein axialer Ausfahranschlag der zwei Segmente gebildet wird, **dadurch gekennzeichnet, dass** die genannte axiale Sperr- und Verriegelungsvorrichtung eine Vielzahl von Riegeln (23, 31) umfasst, die an der Peripherie der Verbindung verteilt sind,
- und dass die Riegel (23, 31) an der Peripherie der Ansätze (24, 25) in Kontakt verteilt sind und angepasst sind, um sie axial mit einer permanenten restlichen, elastischen, axialen Pressspannung gegeneinander zu pressen.

2. Mast gemäß Anspruch 1, **dadurch gekennzeichnet, dass**:
- er bei jedem mobilen Segment einen Antriebsflansch (13) umfasst, der mit dem mobilen Segment fest verbunden ist und durch den motorisierten Mechanismus (6, 7) zum axialen Ausfahren in axialer Ausfahrtranslation angetrieben wird,
- jeder Riegel (23, 31) umfasst:
- einen Verhakungsfinger (23), der sich axial über den proximalen Ansatz (25) des mobilen Segments in der Ausfahrrichtung erstreckt, wobei dieser Verhakungsfinger (23) mit dem Antriebsflansch (13) fest verbunden und geeignet ist, um eingreifend mit einer Verriegelungstragweite (31) verhakt zu werden, die fest mit dem distalen Ansatz (24) des festen Segments verbunden ist, wodurch jegliches spätere relative Ausfahren des Verhakungsfingers (23) im Verhältnis zum distalen Ansatz (24) des festen Segments in der entgegengesetzten Richtung zur Ausfahrrichtung verboten ist,
- wenigstens eine Feder (14, 15), bezeichnet als axiale Pressfeder (14, 15), die zwischen dem Antriebsflansch (13) und dem proximalen Ansatz (25) des mobilen Segments derart zwischengeschaltet ist, dass der Antriebsflansch (13) und jeder Verhakungsfinger (23) im Verhältnis zum proximalen Ansatz (25) des mobilen Segments axial in der entgegengesetzten Richtung zum Ausfahren zurückgeholt wird,
- wobei die Länge jedes Verhakungsfingers (23) angepasst ist, damit die Verhakung (23) dieses Fingers mit der genannten Verriegelungstragweite (31) des festen Segments einen Ausfahrlauf des Antriebsflansches (13) entgegen jeder axialen Pressfeder (14, 15) über ihre Position hinweg erfordert, in der die Ansätze (24, 25) mit dem axialen Anschlag in Kontakt kommen.

3. Mast gemäß Anspruch 2, **dadurch gekennzeichnet, dass**:
- der Antriebsflansch (13) sich oberhalb des proximalen Ansatzes (25) des mobilen Segments befindet,
- jede axiale Pressfeder (14, 15) eine Kompressionsfeder ist, die dazu tendiert, den Antriebsflansch (13) des proximalen Ansatzes (25) zu beabstanden.

4. Mast gemäß Anspruch 2 oder 3, **dadurch gekennzeichnet, dass** jedes mobile Segment einen röhrenförmigen Hauptkörper (11) mit einer radialen Abmessung unterhalb des Antriebsflanschs (13) aufweist und dass jeder Verhakungsfinger (23) des mobilen Segments (23) sich axial außerhalb des röhrenförmigen Hauptkörpers (11) erstreckt und aus einem Stift (32) gebildet wird, der wenigstens radial nach innen elastisch flexibel ist und ein freies Ende (33) aufweist, das einen Haken derart bildet, dass die Verhakung jedes Verhakungsfingers (23) des mobilen Segments mit der genannten Verriegelungstragweite (31) des distalen Ansatzes (24) des festen Segments per elastischer Verformung in radialer Biegung des Verhakungsfingers (23) nach außen erfolgt.

5. Mast gemäß Anspruch 4, **dadurch gekennzeichnet, dass** das freie Ende jedes Verhakungsfingers (23) wenigstens eine im Verhältnis zur Achse des Verhakungsfingers (23) geneigte Tragweite (34) aufweist, wobei diese geneigte Tragweite (34) sich radial nach außen, über den Stift (32) hinweg erstreckt, der den Verhakungsfinger (23) bildet und geeignet ist, um mit einer internen Wand (22) in Kontakt zu treten, die mit dem distalen Ansatz (24) des festen Segments fest verbunden ist, wobei die genannte geneigte Tragweite (34) sich radial bis zu einer Entfernung der Achse des Mastes erstreckt, die größer ist als die Entfernung zwischen der genannten internen Wand (22) und der Achse des Mastes derart, dass unter der Wirkung des Ausfahrens die Verformung durch elastische Biegung des Verhakungsfingers (23) angetrieben wird.

6. Mast gemäß Anspruch 2 bis 5, **dadurch gekennzeichnet, dass** jeder Verhakungsfinger (23) und die genannte Verriegelungstragweite (31) des festen Segments angepasst sind, um eine normalerweise irreversible Verriegelung des Verhakungsfingers (23) im Verhältnis zum distalen Ansatz (24) des festen Segments zu bilden.

7. Mast gemäß Anspruch 2 bis 6, **dadurch gekennzeichnet, dass** der motorisierte Mechanismus (6, 7) zum axialen Ausfahren der Segmente eine zentrale, axiale Endlosschnecke (7) umfasst und bei jedem auszufahrenden Segment Verzahnungsfinger (16), die durch den Antriebsflansch (13) getragen werden und sich radial nach innen erstrecken, um per Verzahnung mit dieser zentralen Schnecke (7) zusammenwirken zu können.

8. Mast gemäß Anspruch 1 bis 7, **dadurch gekennzeichnet, dass** jeder proximale Ansatz (25) und jeder distale Ansatz (24) eine Wand in ebener Kronenform umfasst, die sich in einer transversalen, radialen Ebene zur Ausfahrachse erstreckt.

9. Mast gemäß Anspruch 1 bis 8, **dadurch gekennzeichnet, dass** sich das mobile Segment radial zur Innenseite des festen Segments erstreckt, wobei sich der proximale Ansatz (25) des mobilen Segments radial zur Außenseite im Verhältnis zu einer externen zylindrischen Wand (20) des Hauptkörpers des mobilen Segments erstreckt, wobei sich der distale Ansatz (24) des festen Segments radial zur Innenseite im Verhältnis zu einer internen zylindrischen Wand (19) des Hauptkörpers des festen Segments erstreckt.

10. Mast gemäß Anspruch 1 bis 9, **dadurch gekennzeichnet, dass** er Folgendes umfasst:
- Ein proximales Segment (2), das fest mit dem motorisierten Mechanismus (6, 7) zum Ausfahren verbunden ist,
- ein distales Segment (4), dessen distales Ende (9) das freie, distale Ende des Mastes in ausgefahrener Position bildet,
- wenigstens ein Zwischenelement (5), das radial zwischen dem proximalen Segment (2) und dem distalen Segment (4) zwischengeschaltet ist,
- für jedes Zwischensegment (4) einen Mechanismus (36, 39, 40) zum axialen Sperren dieses Zwischensegments (5) im Verhältnis zu dem Segment, das seinerseits unmittelbar an der Seite des proximalen Segments anliegt, wobei dieser Mechanismus (36, 39, 40) zum axialen Sperren geeignet ist, um am Ende der Verschiebung des unmittelbar am Zwischensegment (5) der Seite des distalen Segments anliegenden Segments freigesetzt werden zu können.

11. Mast gemäß Anspruch 10, **dadurch gekennzeichnet, dass** der Mechanismus (36, 39, 40) zum axialen Sperren einen Steuerstift (36) umfasst, der in axialer Translation im Verhältnis zum distalen Ansatz (24) des Zwischensegments (5) geführt ist und geeignet ist, um durch den Antriebsflansch (13) des unmittelbar anliegenden mobilen Segments, das im Verhältnis zum Zwischensegment (5) ausgefahren ist, am Ende des Ausfahrens dieses mobilen Segments derart zurückgeschoben zu werden, dass eine Sperrkugel (39) freigesetzt wird, die durch das Zwischensegment (5) getragen wird und sich radial nach außen erstreckt, um in der Sperrposition in einer Aussparung (40) des unmittelbar anliegenden Segments zur Außenseite dieses Zwischensegments (5) untergebracht zu werden.

12. Mast gemäß Anspruch 1 bis 11, **dadurch gekennzeichnet, dass** jedes Segment (2, 4, 5) einen Hauptkörper (11) umfasst, der aus einer zylindrischen Revolutionsröhre aus Verbundmaterial gebildet wird, das mit der räumlichen Umgebung kompatibel ist.
